(19) **Europäisches Patentamt**

**European Patent Office**

**Office européen des brevets**

(11) **EP 0 607 773 B1**

(12) **EUROPÄISCHE PATENTSCHRIFT**

(45) Veröffentlichungstag und Bekanntmachung des Hinweises auf die Patenterteilung:
**18.10.2000 Patentblatt 2000/42**

(51) Int. Cl.[7]: **C08F 4/635**, C08F 10/00

(21) Anmeldenummer: **94100011.9**

(22) Anmeldetag: **03.01.1994**

(54) **Verfahren zur Herstellung von niedermolekularen Poly-1-olefinen**

Process for preparing low molecular-weight poly-1-olefins

Procédé de préparation de poly-1-oléfines de bas poids moléculaires

(84) Benannte Vertragsstaaten:
**DE ES FR GB IT NL**

(30) Priorität: **07.01.1993 DE 4300196**

(43) Veröffentlichungstag der Anmeldung:
**27.07.1994 Patentblatt 1994/30**

(73) Patentinhaber: **Clariant GmbH**
**65929 Frankfurt am Main (DE)**

(72) Erfinder:
• **Böhm, Ludwig, Dr.**
**D-65795 Hattersheim/M. (DE)**
• **Herrmann, Hans-Friedrich, Dr.**
**D-64291 Darmstadt (DE)**
• **Berthold, Joachim, Dr.**
**D-65817 Eppstein/Taunus (DE)**
• **Hohner, Gerd, Dr.**
**D-86368 Gersthofen (DE)**
• **Lecht, Rainer, Dr.**
**D-65779 Kelkheim/Taunus (DE)**
• **Vetter, Hans Joachim, Dr.**
**D-65812 Bad Soden/Taunus (DE)**

(56) Entgegenhaltungen:
**EP-A- 0 526 891     DE-A- 4 017 661**

Bemerkungen:
Die Akte enthält technische Angaben, die nach dem Eingang der Anmeldung eingereicht wurden und die nicht in dieser Patentschrift enthalten sind.

## Beschreibung

Die Erfindung bezieht sich auf ein Verfahren zur Herstellung niedermolekularer Poly-1-olefine unter Verwendung eines Katalysators auf der Basis einer MagnesiumalkoholatDispersion in gesättigten Kohlenwasserstoffen oder Kohlenwasserstoffgemischen.

Aus Magnesiumalkoholaten $Mg(0R^1)(0R^2)$ oder "komplexen" Magnesiumalkoholaten lassen sich durch Umsetzung mit Verbindungen des Titans, Zirkons, Vanadins oder Chroms Feststoffe herstellen, die zusammen mit metallorganischen Verbindungen der 1. bis 3. Hauptgruppe des Periodensystems hervorragende Katalysatoren für die Olefinpolymerisation ergeben.

Bekannt ist ein Verfahren zur Polymerisation von 1-Olefinen in Gegenwart eines Mischkatalysators, dessen Übergangsmetall-Komponente durch Umsetzung von Magnesiumalkoholaten mit vierwertigen, halogenhaltigen Titanverbindungen hergestellt wurde (vgl. US 3 644 318). Die Magnesiumalkoholate werden als pulverförmige Handelsprodukte eingesetzt.

Weiterhin ist ein Verfahren bekannt, bei welchem ein gelöstes Magnesiumalkoholat mit einer halogenhaltigen Ti- oder V-Verbindung und einem Übergangsmetall-alkoholat umgesetzt (vgl. EP 319 173) wird. Die dabei entstehenden Katalysator-partikel sind kugelförmig und besitzen eine mittlere Teilchengröße von 10 bis 70 μm.

Weiter bekannt ist die Herstellung einer Katalysator-Komponente (vgl. EP 223 011) durch die Reaktion einer vierwertigen, halogenhaltigen Titanverbindung mit einem Magnesiumalkoholat, welches mindestens 40 Gew.-% Teilchen eines Durchmessers kleiner 63 μm enthält. Ein Magnesiumalkoholat mit dieser Korngröße erhält man unter anderem durch Mahlen in einer Kugelmühle.

Ein Problem bei der Herstellung niedermolekularer Polyolefine mit derartigen Katalysatoren ist der starke Aktivitäts-Rückgang bei der Regelung mit Wasserstoff. Mit Katalysatoren aus der Umsetzung von Titantetrachlorid und Magnesiumethylat werden bei der Herstellung von Polyolefinwachsen Aktivitäten von kleiner 300 g/mmol Ti angegeben (vgl. DE 19 29 863).

Es wurde gefunden, daß man Katalysatoren mit hoher bis sehr hoher Aktivität, bei Regelung der Molmasse mit Wasserstoff, und mit der Möglichkeit, die Teilchengrößenverteilung des Polymerisats zu steuern, erhält, wenn man das Magnesiumalkoholat als Dispersion in einem gesättigten Kohlenwasserstoff oder Kohlenwasserstoff-Gemisch einsetzt, welche durch intensive Scherung der Magnesiumalkoholat-Suspension hergestellt wurde.

Die Erfindung betrifft somit ein Verfahren zur Herstellung eines niedermolekularen Poly-1-olefins mit einer Viskositätszahl kleiner 80 $cm^3$/g durch Homo- oder Copolymerisation eines 1-Olefins der Formel $R^4CH=CH_2$, in der $R^4$ ein Wasserstoffatom oder einen Alkylrest mit 1 bis 10 Kohlenstoffatomen bedeutet, in Suspension, in Lösung oder in der Gasphase, bei einer Temperatur von 20 bis 200°C und einem Druck von 0,5 bis 50 bar, in Gegenwart eines Katalysators, der aus dem Umsetzungsprodukt einer Magnesiumalkoholat-Dispersion, deren Teilchengröße 100 bis 3000 nm beträgt, mit einer Übergangsmetallverbindung und einer aluminiumorganischen Verbindung (Komponente a) sowie einer metallorganischen Verbindung eines Metalls der Gruppe I, II, oder III des Periodensystems (Komponente b) besteht, dadurch gekennzeichnet, daß man die Polymerisation in Gegenwart eines Katalysators durchführt, dessen Komponente a in der Weise hergestellt wurde, daß die Magnesiumalkoholat-Dispersion mit einer Verbindung eines Metalls aus der Gruppe Titan, Zirkon, Vanadium und Chrom und danach mit einer chlorhaltigen aluminium-organischen Verbindung umgesetzt wurde, wobei die Molmasse des Polymerisats durch Wasserstoff geregelt wird.

Zur Herstellung der Komponente a wird ein im Handel erhältliches Magnesiumalkoholat verwendet. Dieses Magnesiumalkoholat kann ein "einfaches" Magnesiumalkoholat der Formel $Mg(0R^1)(0R^2)$ sein, in der $R^1$ und $R^2$ gleich oder verschieden sind und einen Alkylrest mit 1 bis 6 Kohlenstoffatomen bedeuten. Beispiele sind $Mg(0C_2H_5)_2$, $Mg(0iC_3H_7)_2$, $Mg(0nC_4H_9)_2$, $Mg(0CH_3)(0C_2H_5)$, $Mg(0C_2H_5)(0nC_3H_7)$. Es kann auch ein "einfaches" Magnesiumalkoholat der Formel $Mg(OR)_nX_m$ verwendet werden, in der X = Halogen, $(S0_4)_{1/2}$, OH, $(C0_3)_{1/2}$, $(P0_4)_{1/3}$, Cl ist, R die oben genannte Bedeutung von $R^1$ oder $R^2$ hat und n + m = 2 ist.

Es kann jedoch auch ein "komplexes" Magnesiumalkoholat eingesetzt werden. Als "komplexes" Magnesiumalkoholat wird ein Magnesiumalkoholat bezeichnet, das neben Magnesium mindestens ein Metall der 1. bis 4. Hauptgruppe des Periodensystems enthält. Beispiele für ein derartiges "komplexes" Magnesiumalkolat sind $[Mg(0iC_3H_7)_4]Li_2$, $[Al_2(0iC_3H_7)_8]Mg$, $[Si(0C_2H_5)_6]Mg$, $[Mg(0C_2H_5)_3]Na$, $[Al_2(0iC_4H_9)_8]Mg$, $[Al_2(O\text{-sec-}C_4H_9)_6(OC_2H_5)_2]Mg$.

Die Herstellung der "komplexen" Magnesiumalkoholate (Alkoxosalze) erfolgt nach bekannten Methoden. Für die Herstellung seien folgende Beispiele genannt:

1. Man läßt zwei Metallalkoholate in einem geeigneten Lösemittel aufeinander einwirken, zum Beispiel

$$2\,Al(0R)_3 + Mg(OR)_2 \rightarrow [Al_2(OR)_8]Mg$$

2. Auflösen von Magnesium in einer alkoholischen Lösung eines Metallalkoholats

$$2 \, LiOR + Mg + 2 \, R0H \rightarrow [Mg(OR)_4]Li_2 + H_2$$

3. Gleichzeitiges Auflösen zweier Metalle in Alkohol

$$8 \, ROH + Mg + 2 \, Al \rightarrow [Al_2(OR)_8]Mg + 4 \, H_2$$

Bevorzugt verwendet werden die einfachen Magnesiumalkoholate, insbesondere $Mg(0C_2H_5)_2$, $Mg(0nC_3H_7)_2$ und $Mg(0iC_3H_7)_2$.

Handelsübliches $Mg(0C_2H_5)_2$ hat im allgemeinen folgende Spezifikation:

| Mg Gehalt | 21 - 22 Gew.-% |
|---|---|
| Summe $Mg(OH)_2$ + $MgC0_3$ | $\leq$ 1 Gew.-% |
| $C_2H_50H$-Gehalt | < 0,3 Gew.-% |

Der mittlere Korndurchmesser liegt bei 500 µm. 90 % der Partikel haben einen Korndurchmesser im Bereich von 200 bis 1200 µm.

Das handelsübliche Magnesiumalkoholat wird in einem inerten gesättigten Kohlenwasserstoff oder Kohlenwasserstoff-Gemisch suspendiert. Diese Suspension wird unter Schutzgas (Ar, $N_2$) in einem Reaktor mittels eines hochtourigen Dispergators (Homogenisators) (z.B. $^{®}$Ultra-Turrax oder $^{®}$Dispax, IKA-Maschinenbau Janke & Kunkel GmbH) in eine Magnesiumalkoholat-Dispersion überführt.

Die Magnesiumalkoholat-Suspension (vgl. auch Römpp's Chemielexikon, Frank'sche Verlagsanstalt, Stuttgart, 8. Aufl. (1987), S. 4067) enthält das Magnesiumalkoholat als feste, unlösliche Teilchen im gesättigten Kohlenwasserstoff oder Kohlenwasserstoffgemisch suspendiert. Diese Suspension ist trübe und nicht transparent. Sie zeigt Newton'sches Verhalten (vgl. auch W:-M. Kulicke, Fließverhalten von Stoffen und Stoffgemischen, Hüthig & Wepf Verlag, Basel, 1986, S. 29) und hat bei 25°C eine Viskosität von 0,0003 bis 0,0008 Pa.s. Wenn diese Magnesiumalkoholat-Suspension mit dem hochtourigen Dispergator (Homogenisator) bei 25°C behandelt wird, so beobachtet man im Verlauf eines Zeitraums von ca. 1/2 h eine rasche Zerkleinerung der suspendierten Teilchen, eine starke Zunahme der Trübung und ein Anstieg der Viskosität auf 0,0015 bis 0,0025 Pa.s. Im weiteren Verlauf (ca. 2 bis 8 h) verschwindet die Trübung und die Viskosität steigt weiter an auf 0,006 bis 0,010 Pa.s. Die Magnesiumalkoholat-Teilchen sind nicht mehr zu erkennen. Es ist eine Magnesiumalkoholat-Dispersion (Lyogel) entstanden. Diese Magnesiumalkoholat-Dispersionen (1,2 mol Magnesiumethylat/$dm^3$ Dieselöl) zeigen kein Newton'sches Verhalten mehr. Die Scherviskosität als Funktion der Schergeschwindigkeit wird mit einem Rotationsviskosimeter bei 25°C gemessen. Diese Magnesiumalkoholat-Dispersionen haben ein pseudoplastisches Fließverhalten. Das pseudoplastische Fließverhalten ist dadurch gekennzeichnet, daß das Scherfließen erst oberhalb einer bestimmten Schubspannung einsetzt (im vorliegenden Fall 1,2 mol Magnesiumethylat/$dm^3$ Dieselöl ($C_{10}/C_{11}$-Benzinschnitt) bei ca. 2 Pa) und daß die Scherviskosität dann einen konstanten Wert annimmt (hier 0,006 Pa.s).

Wenn man diese Magnesiumalkoholat-Dispersion mit gesättigten Kohlenwasserstoffen oder Kohlenwasserstoffgemischen stark verdünnt (1:100), so kann man durch dynamische Lichtstreuung mit einem Meßgerät ($^{®}$Malvern System 4700) den mittleren Durchmesser der Magnesiumalkoholat-Teilchen bestimmen. Er liegt im Bereich 100 bis 3000 nm (0,1 bis 3 µm). Das bedeutet, daß der mittlere Durchmesser des Teilchens (ca. 500 µm) um mehr als den Faktor 100 abgenommen hat.

Die Magnesiumalkoholat-Dispersion unterscheidet sich von der Suspension in zwei wesentlichen Merkmalen. Sie ist, wie vorstehend gezeigt, wesentlich viskoser als die Suspension und das dispergierte Magnesiumalkoholat sedimentiert im Gegensatz zum suspendierten Magnesiumalkoholat sehr viel langsamer, und sehr viel weniger (einige Stunden).

Als inerter gesättigter Kohlenwasserstoff eignet sich ein aliphatischer oder cycloaliphatischer Kohlenwasserstoff, wie Butan, Pentan, Hexan, Heptan, Isooctan, Cyclohexan, Methylcyclohexan, sowie ein aromatischer Kohlenwasserstoff wie Toluol, Xylol; auch hydrierte Dieselöl- oder Benzinfraktionen, die sorgfältig von Sauerstoff, Schwefelverbindungen und Feuchtigkeit befreit worden sind, sind brauchbar.

Zur Herstellung der Katalysator-Komponente a wird die so in einem gesättigten Kohlenwasserstoff hergestellte Magnesiumalkoholat-Dispersion zunächst in einer oder mehreren Stufen mit einer Titan-Verbindung ($TiCl_4$, $Ti(OR)_4$, u.a.), Zirkonium-Verbindung ($ZrCl_4$, $Zr(OR)_4$, u.a.), Vanadin-Verbindung ($VCl_4$, $V0Cl_3$, u.a.) oder Chrom-Verbindung ($Cr0_2Cl_2$, u.a.) und anschließend mit einer aluminiumorganischen Verbindung umgesetzt.

Dabei wird die Magnesiumalkoholat-Dispersion im 1. Schritt mit der Übergangsmetallverbindung bei einer

3

Temperatur von 50 bis 100°C, vorzugsweise von 60 bis 90°C, in Gegenwart eines gesättigten Kohlenwasserstoffs oder Kohlenwasserstoff-Gemischs unter Rühren umgesetzt. Auf 1 mol Magnesiumalkoholat werden 0,1 bis 5 mol Übergangsmetallverbindung eingesetzt, vorzugsweise 0,1 bis 2 mol Übergangsmetallverbindung auf 1 mol Magnesiumalkoholat. Die Reaktionsdauer beträgt 0,5 bis 8 Stunden, vorzugsweise 2 bis 6 Stunden.

Diese Suspension wird in einem 2. Schritt bei einer Temperatur von 60 bis 140°C, vorzugsweise von 80 bis 120°C, über eine Zeitdauer von 0,2 bis 8 Stunden, vorzugsweise 0,5 bis 6 Stunden mit einer aluminiumorganischen Komponente in einem Verhältnis von 0,3 bis 3 mol Aluminium, bevorzugt 0,5 bis 2,0 mol Al bezogen auf 1 mol Magnesium umgesetzt. Als aluminiumorganische Verbindungen eignen sich chlorhaltige aluminiumorganische Verbindungen wie Dialkylaluminiummonochloride der Formel $(R^3)_2AlCl$ oder Alkylaluminiumsesquichloride der Formel $(R^3)_3Al_2Cl_3$, worin der Rest $R^3$ ein Alkylrest mit 1 bis 16 Kohlenstoffatomen ist. Als Beispiele seien $(C_2H_5)_2AlCl$, $(i\text{-}C_4H_9)_2AlCl$, $(C_2H_5)_3Al_2Cl_3$ genannt. Es können auch Gemische dieser Verbindungen eingesetzt werden.

Man erhält einen in Kohlenwasserstoffen unlöslichen, magnesium- und übergangsmetallhaltigen Feststoff, der als Komponente a bezeichnet wird. Dieser läßt sich durch mehrfaches Dekantieren der Suspension waschen und suspendiert verwenden, oder zunächst als Feststoff isolieren, lagern und zur späteren Weiterverwendung resuspendieren.

Die Herstellung des Polymerisationskatalysators erfolgt durch Umsetzung der Komponente a mit einer metallorganischen Verbindung eines Metalls der Gruppe I, II oder III des Periodensystems (Komponente b). Vorzugsweise verwendet man als Komponente b aluminiumorganische Verbindungen. Als aluminiumorganische Verbindungen eignen sich chlorhaltige aluminiumorganische Verbindungen wie Dialkylaluminiummonochloride der Formel $R^3_2AlCl$ oder Alkylaluminiumsesquichloride der Formel $R^3_3Al_2Cl_3$, worin $R^3$ ein Alkylrest mit 1 bis 16 Kohlenstoffatomen ist. Als Beispiele seien genannt $(C_2H_5)_2AlCl$, $(iC_4H_9)_2AlCl$, $(C_2H_5)_3Al_2Cl_3$. Es können auch Gemische dieser Verbindungen eingesetzt werden.

Besonders bevorzugt werden als aluminiumorganische Verbindungen chlorfreie Verbindungen eingesetzt. Hierfür eignen sich einerseits die Umsetzungsprodukte von Aluminiumtrialkylen oder Aluminiumdialkylhydriden mit Kohlenwasserstoffresten mit 1 bis 6 Kohlenstoffatomen, vorzugsweise $Al(iC_4H_9)_3$ oder $Al(iC_4H_9)_2H$, mit 4 bis 20 Kohlenstoffatome enthaltenden Diolefinen, vorzugsweise Isopren. Beispielsweise sei Aluminiumisoprenyl genannt.

Andererseits eignen sich als solche chlorfreie aluminiumorganische Verbindungen Aluminiumtrialkyle der Formel $AlR^3_3$ oder Aluminiumdialkylhydride der Formel $AlR^3_2H$, in denen $R^3$ ein Alkylrest mit 1 bis 16 Kohlenstoffatomen bedeutet. Beispiele sind $Al(CH_3)_3$, $Al(C_2H_5)_3$, $Al(C_2H_5)_2H$, $Al(C_3H_7)_3$, $Al(C_3H_7)_2H$, $Al(iC_4H_9)_3$, $Al(iC_4H_9)_2H$, $Al(C_8H_{17})_3$, $Al(C_{12}H_{25})_3$, $Al(C_2H_5)(C_{12}H_{25})_2$, $Al(iC_4H_9)(C_{12}H_{25})_2$.

Es können auch Mischungen von metallorganischen Verbindungen von Metallen der I., II. oder III. Gruppe des Periodensystems, insbesondere Mischungen verschiedener aluminiumorganischer Verbindungen eingesetzt werden. Beispielsweise seien folgende Mischungen genannt:

$Al(C_2H_5)_3$ und $Al(iC_4H_9)_3$, $Al(C_2H_5)_2Cl$ und $Al(C_8H_{17})_3$, $Al(C_2H_5)_3$ und $Al(C_8H_{17})_3$, $Al(C_4H_9)_3$ und $Al(C_8H_{17})_3$, $Al(iC_4H_9)_3$ und $Al(C_8H_{17})_3$, $Al(C_2H_5)_3$ und $Al(C_{12}H_{25})_3$, $Al(iC_4H_9)_3$ und $Al(C_{12}H_{25})_3$, $Al(C_2H_5)_3$ und $Al(C_{16}H_{33})_3$, $Al(C_3H_7)_3$ und $Al(C_{18}H_{37})_2(iC_4H_9)$, $Al(C_2H_5)_3$ und Aluminiumisoprenyl (Umsetzungsprodukt von Isopren mit $Al(iC_4H_9)_3$ oder $Al(iC_4H_9)_2H$).

Das Mischen der Komponente a und der Komponente b kann vor der Polymerisation in einem Rührkessel bei einer Temperatur von -30 bis 150°C, vorzugsweise - 10 bis 120°C erfolgen. Es ist auch möglich, die beiden Komponenten direkt im Polymerisationskessel bei einer Temperatur von 20 bis 200°C zu vereinigen. Die Zugabe der Komponente b kann jedoch auch in zwei Schritten erfolgen, indem vor der Polymerisationsreaktion die Komponente a mit einem Teil der Komponente b bei einer Temperatur von -30 bis 150°C voraktiviert wird und die weitere Zugabe der Komponente b in dem Polymerisationsreaktor bei einer Temperatur von 20 bis 200°C erfolgt.

Der Polymerisationskatalysator wird zur Polymerisation von 1-Olefinen der Formel $R^4\text{-CH} =CH_2$, in der $R^4$ ein Wasserstoffatom oder einen Alkylrest mit 1 bis 10 C-Atomen bedeutet, eingesetzt, beispielsweise Ethylen, Propylen, Buten-(1), Hexen-(1), 4-Methylpenten-(1), Octen-(1).

Vorzugsweise werden Ethylen oder Propylen allein oder im Gemisch mit einem anderen 1-Olefin der obigen Formel polymerisiert oder copolymerisiert.

Insbesondere wird Ethylen allein oder ein Gemisch von mindestens 80 Gew.-% Ethylen und maximal 20 Gew.-% eines anderen 1-Olefins der obigen Formel polymerisiert.

Die Polymerisation wird in bekannter Weise in Lösung, in Suspension oder in der Gasphase, kontinuierlich oder diskontinuierlich, ein- oder mehrstufig bei einer Temperatur von 20 bis 200°C, vorzugsweise 50 bis 150°C, durchgeführt. Der Druck beträgt 0,5 bis 50 bar. Bevorzugt ist die Polymerisation in dem technisch besonders interessanten Druckbereich von 5 bis 30 bar.

Dabei wird die Komponente a in einer Konzentration, bezogen auf Übergangsmetall, von 0,0001 bis 1, vorzugsweise 0,001 bis 0,5 mmol Übergangsmetall pro $dm^3$ Dispergiermittel angewendet. Die metallorganische Verbindung b wird in einer Konzentration von 0,1 bis 5 mmol, vorzugsweise 0,5 bis 4 mmol pro $dm^3$ Dispergiermittel verwendet. Prinzipiell sind aber auch höhere Konzentrationen möglich.

Die Suspensions- oder Lösungspolymerisation wird in einem für das Ziegler-Niederdruckverfahren gebräuchlichen inerten Lösemittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin können Benzin- bzw. hydrierte Dieselölfraktionen, die sorgfältig von Sauerstoff, Schwefelverbindungen und Feuchtigkeit befreit worden sind, benutzt werden.

Die Gasphasenpolymerisation kann direkt oder nach Vorpolymerisation des Katalysators in einem Suspensionsverfahren durchgeführt werden.

Die Molmasse des Polymerisats wird in bekannter Weise geregelt, vorzugsweise wird dazu Wasserstoff verwendet.

Der Katalysator besitzt eine sehr gute Wasserstoffansprechbarkeit und hohe Aktivität bei Gegenwart von Molekulargewichts-Reglern wie Wasserstoff. Der Katalysator ist hierdurch hervorragend zur Herstellung niedermolekularer Polyolefine geeignet.

Der Katalysator ermöglicht in der Lösungspolymerisation die Herstellung von Wachsen mit verringertem Restasche-Gehalt. Darüber hinaus ermöglicht die mit diesem Katalysator herstellbare große Teilchengröße der Polymerpartikel die Durchführung der Suspensionspolymerisation zur Herstellung niedermolekularer Polyolefine. Der große Korndurchmesser und der niedrige Feinanteil der Polymer-Pulver ermöglicht eine leichte Abtrennbarkeit und Trocknung vom Suspensionsmedium.

Ferner ermöglicht das erfindungsgemäße Verfahren, die Katalysatoren so herzustellen, daß damit die Korngrößenverteilung und in gewissem Umfang auch die Kornform des entstehenden Polymerpulvers eingestellt werden kann.

Man erhält im allgemeinen eine verbesserte Kornmorphologie, hohe mittlere Korndurchmesser ($d_{50}$-Werte) enge Korngrößenverteilung, keine Grob- und Feinanteile, und hohe Katalysatorproduktivitäten.

Bei den Beispielen wurde zur Kontaktherstellung und zur Polymerisation eine hydrierte Dieselölfraktion mit einem Siedebereich von 130 bis 170°C verwendet. Der mittlere Korndurchmesser $d_{50}$ und der Feinanteil < 100 $\mu$m von Polymerpulvern wurde durch Siebanalyse bestimmt. Das Verhältnis Mg:Ti:Cl wurde nach Zersetzung der Katalysatorsuspension mit Schwefelsäure nach üblichen analytischen Verfahren bestimmt.

Beispiel 1

1,2 mol (= 137 g) im Handel erhältliches $Mg(OC_2H_5)_2$ (Mg-Gehalt 21 bis 22 Gew.-%, $C_2H_5OH$-Gehalt < 0,3 Gew.-%, mittlerer Korndurchmesser 500 $\mu$m, 90% der Teilchen haben Korndurchmesser im Bereich von 200 bis 1200 $\mu$m) wurden in 1,0 $dm^3$ Dieselöl suspendiert. Die Magnesiumethylatteilchen sind im Kohlenwasserstoffgemisch unlöslich und bildeten eine Suspension.

Diese Suspension wurde in einem zylindrischen Glasgefäß unter Schutzgas (Ar, $N_2$) unter Ausschluß von Luft ($O_2$) und Feuchtigkeit ($H_2O$) mit einem im Handel erhältlichen Dispergator ( ®ULTRA-TURRAX T 50, Janke & Kunkel GmbH & Co. KG, D-79219 Staufen) in eine Magnesiumethylat/Dieselöl-Dispersion überführt. Dieser Vorgang dauerte bei Raumtemperatur beginnend mindestens 3 h. Das Gefäß mußte stark gekühlt werden, um die Temperatur im Gefäß nicht stark ansteigen zu lassen (maximal auf 50 °C).

Die Magnesiumethylat/Dieselöl-Suspension enthielt die Magnesiumethylatteilchen in suspendierter Form. Ohne Rühren sedimentierten diese Teilchen in ca. 10 Minuten in den unteren Teil des Gefäßes. Die Scherviskosität dieser Suspension betrug bei 25 °C 0,00065 Pa s. Die Magnesiumethylat/Dieselöl-Suspension war also dünnflüssig und enthielt grobe Partikel von Magnesiumethylat (200 bis 1200 $\mu$m). Nach Einschalten des Dispergators war folgendes zu beobachten: Im Verlauf einer halben Stunde wurden die suspendierten Magnesiumethylatteilchen rasch zerkleinert. Das war mit einer starken Zunahme der Trübung und einem Viskositätsanstieg verbunden. Die Viskosität (Messung mit einem Rotationsviskosimeter von Haake) stieg auf 0,0020 Pa.s. Im weiteren Verlauf stieg die Viskosität weiter an auf 0,006 bis 0,010 Pa.s und die suspendierten Teilchen verschwanden. Es bildete sich eine Magnesiumethylat/Dieselöl-Dispersion (Lyogel). Die mit einem ®Malvern System 4700 bestimmte, mittlere Partikelgröße (für diese Messung mußte mit Dieselöl um den Faktor 1:100 verdünnt werden) lag bei 100 bis 3000 nm (0,1 bis 3 $\mu$m).

Die Magnesiumethylat/Dieselöl-Dispersion zeigte gegenüber der Magnesiumethylat/Dieselöl-Suspension folgende charakteristische Unterschiede: Die mittlere Teilchengröße sank von ca. 500 $\mu$m auf 100 bis 3000 nm. Die Magnesiumethylat/Dieselöl-Suspension zeigte Newton'sches Fließverhalten bei einer Viskosität von 0,00065 Pa.s/ 25 °C. Die Magnesiumethylat/Dieselöl- Dispersion hingegen zeigte pseudoplastisches Verhalten bei einer wesentlich höheren Viskosität von 0,006 Pa.s/25 °C. Das Fließen setzte bei einer Schubspannung von ca. 2,0 Pa ein.

Nach Sedimentation konnte das Sedimentationsvolumen dieser Magnesiumalkoholat/Dieselöl-Dispersion bestimmt werden. Es betrug bei einem Magnesiumalkoholatgehalt von 137 g in 1 $dm^3$ Dieselöl 30 bis 40 Vol.%. Der sedimentierte Anteil hatte eine graue Farbe und war ein thixotropes Lyogel mit hoher Viskosität. Wenn man das Gefäß umdrehte, so verblieb das Lyogel am Boden des Gefäßes und trennte sich vom Dieselöl. Bei kräftigem Schütteln bildete sich aus dem Lyogel mit dem überstehenden Dieselöl eine niedrigviskose Dispersion.

Diese Magnesiumethylat/Dieselöl-Dispersion wurde mit einer Übergangsmetallverbindung der IV. bis VI. Gruppe PSE umgesetzt.

In einem 4 $dm^3$ Vierhalskolben wurde unter Inertgas 1 mol der $Mg(C_2H_5)_2$/ Dieselöl-Dispersion vorgelegt und mit Dieselöl auf ein Gesamtvolumen von 1,3 $dm^3$ verdünnt. Unter Rühren bei 150 Upm wurde der Ansatz auf 85°C erwärmt. Bei dieser Temperatur und einer Rührerdrehzahl von 70 Upm wurden innerhalb von 4 h 660 $cm^3$ einer Lösung von 0,3 mol $TiCl_4$ in Dieselöl gleichmäßig zugetropft. Anschließend wurde die Suspension weitere 0,5 h bei 85°C gerührt. Danach wurde bei 200 Upm die Temperatur auf 110°C angehoben und bei dieser Temperatur während 2 h 830 $cm^3$ einer Lösung mit 750 mmol $Al_2Cl_3(C_2H_5)_3$ in Dieselöl gleichmäßig zugetropft. Nach weiteren 2 h bei 110°C wurde der Rührmotor abgestellt und die Suspension abgekühlt. Nach Abkühlen auf Raumtemperatur wurde durch sechsmaliges Dekantieren und Wiederauffüllen der überstehenden klaren Lösung der Katalysator von löslichen Reststoffen befreit. Das molare Verhältnis der fertigen Katalysatorkomponente a Mg:Ti:Cl betrug etwa 1:0,3:2,4.

Beispiel 2

In einem 40 $dm^3$ Reaktor wurden unter Inertbedingungen 15 $dm^3$ Dieselöl (Siedebereich 140 - 160°C) vorgelegt und auf 140°C aufgeheizt. Der Gesamtdruck wurde mit Wasserstoff auf 10 bar und dann mit Ethylen auf 15 bar angehoben. Parallel hierzu wurden zur Herstellung des Katalysators 15 mmol (bezogen auf Ti) der Katalysator-Komponente a aus Beispiel 1 mit 90 mmol Triethylaluminium in 1,5 $dm^3$ Dieselöl vermischt. Bei 140°C wurden 0,5 $dm^3$ dieser Katalysator-Suspension und nach Einsetzen der Polymerisation 4 kg/h Ethylen sowie 0,5 kg/h Wasserstoff zudosiert. Über 1 h wurde der Druck durch Nachdosieren von Katalysator bei 15 bar konstant gehalten und anschließend die Polymerlösung durch Abdestillieren des Lösemittels aufgearbeitet. Bei einer Ausbeute von 3,8 kg wurden 8,7 mmol (bezogen auf Ti) der Katalysator-Suspension entsprechend 0,44 kg/mmol Ti verbraucht. Die Schmelzviskosität des Produkts bei 140°C war 220 mPa.s.

Vergleichsbeispiel A

Das Beispiel 2 wurde wiederholt, wobei anstelle der Katalysator-Komponente a aus Beispiel 1 der Trägerkontakt gemäß DE 19 29 863, Beispiel 1, in einer Menge von 35 mmol, bezogen auf Ti, auf 1,5 $dm^3$ eingesetzt wurde. Für eine Ausbeute von 3,8 kg wurden 33,8 mmol (bezogen auf Ti) der Katalysator-Suspension entsprechend 0,11 kg/mmol Ti verbraucht. Die Schmelzviskosität des Produkts bei 140°C war 350 mPa.s.

Beispiel 3

In einem 50 $dm^3$ Reaktor wurden unter Stickstoff 45 $dm^3$ Dieselöl mit 45 mmol $Al(C_2H_5)_3$ und bei einer konstanten Temperatur von 83°C 7,8 bar Wasserstoff vorgelegt. Unter kontinuierlichen Bedingungen wurden dann 0,34 mmol Ti/h der Katalysator-Komponente a aus Beispiel 1, vermischt mit 4,8 mmol Al/h $Al(C_2H_5)_3$, sowie gleichzeitig 3,0 kg/h Ethylen, 5,2 g/h Wasserstoff und 240 $cm^3$/h 1-Buten zudosiert. Nach Einstellung des Gleichgewichts resultierte bei einem Gesamtdruck von 8,9 bar eine Aktivität von 8,8 kg/mmol Titan. Das Produkt konnte problemlos über eine Druck-Filtration vom Dispergiermittel abgetrennt werden. Die Produkt-Kennwerte sind in Tabelle 1 zusammengefaßt.

Beispiel 4

Die Polymerisation gemäß Beispiel 3 wurde wiederholt, wobei Wasserstoff mit 6,9 bar vorgelegt und mit 5 g/h nachdosiert wurde. Bei einer Dosierung von 0,39 mmol Ti/h der Katalysator-Komponente a aus Beispiel 1 resultierte ein Reaktordruck von 8,0 bar. Die Produkt-Kennwerte sind in Tabelle 1 zusammengefaßt.

Beispiel 5

Die Polymerisation gemäß Beispiel 3 wurde wiederholt, wobei Wasserstoff mit 6,6 bar vorgelegt und mit 4,5 g/h nachdosiert wurde. Bei einer Dosierung von 0,28 mmol Ti/h der Katalysator-Komponente a aus Beispiel 1 resultierte ein Reaktordruck von 8,0 bar. Die Produkt-Kennwerte sind in Tabelle 1 zusammengefaßt.

Beispiel 6

Die Polymerisation gemäß Beispiel 3 wurde wiederholt, wobei Wasserstoff mit 7,5 bar vorgelegt und mit 5 g/h nachdosiert wurde. Bei einer Dosierung von 0,19 mmol Ti/h der Katalysator-Komponente a aus Beispiel 1 resultierte ein Reaktordruck von 8,0 bar. Die Produkt-Kennwerte sind in Tabelle 1 zusammengefaßt.

Beispiel 7

Die Polymerisation gemäß Beispiel 3 wurde wiederholt, wobei kein 1-Buten zugegeben wurde und Wasserstoff mit 8 bar vorgelegt und mit 4,8 g/h nachdosiert wurde. Bei einer Dosierung von 0,43 mmol Ti/h der Katalysator-Komponente a aus Beispiel 1 resultierte ein Reaktordruck von 10,3 bar. Die Produkt-Kennwerte sind in Tabelle 1 zusammengefaßt.

Beispiel 8

Die Polymerisation gemäß Beispiel 7 wurde wiederholt, wobei Wasserstoff mit 6,3 bar vorgelegt und mit 4,2 g/h nachdosiert wurde. Bei einer Dosierung von 0,39 mmol Ti/h der Katalysator-Komponente a aus Beispiel 1 resultierte ein Reaktordruck von 8,7 bar. Die Produkt-Kennwerte sind in Tabelle 1 zusammengefaßt.

Beispiel 9

Ein 5 $m^3$ Reaktor wurde unter Inertbedingungen mit 3 $m^3$ Dieselöl sowie 3 mol $Al(C_2H_5)_3$ befüllt und bei einer Temperatur von 140°C 15 bar Wasserstoff vorgelegt. Unter kontinuierlichen Bedingungen wurden 600 kg/h Ethylen, 145 $dm^3$/h Propylen und 119 mmol Ti/h der Katalysator-Komponente a aus Beispiel 1, vermischt mit 500 mmol/h $Al(C_2H_5)_3$, eingeleitet, wobei ein Reaktordruck von 18,5 bar resultierte. Der Wasserstoff wurde in der Gasphase auf 54 Vol% konstant gehalten. Die Lösung des Produkts wurde kontinuierlich entnommen und die Reaktor-Füllmenge durch Zugabe von ca. 700 $dm^3$/h Dieselöl ergänzt. Bei einer Aktivität von 5,7 kg/mmol Ti resultierte ein Produkt, welches nach Abtrennung vom Lösungsmittel eine VZ von 21 $cm^3$/g, eine Schmelzviskosität (140°C) von 520 mPa.s, eine Dichte von 0,932 $g/cm^3$ und eine DSC-Schmelztemperatur von 116°C besaß.

Beispiel 10

Die Polymerisation gemäß Beispiel 9 wurde wiederholt, wobei 500 kg/h Ethylen und 140 mmol Ti/h der Katalysator-Komponente a aus Beispiel 1, vermischt mit 900 mmol/h $Al(C_2H_5)_3$ eingeleitet wurden. Entgegen Beispiel 10 wurde kein Propylen zugegeben und der Wasserstoff in der Gasphase auf 73 Vol % konstant gehalten, wobei ein Reaktordruck von 19,8 bar resultierte. Bei einer Aktivität von 3,57 kg/mmol Ti resultierte ein Produkt, welches nach Abtrennung vom Lösungsmittel eine VZ von 14,5 $cm^3$/g, eine Schmelzviskosität (140°C) von 110 mPa.s, eine Dichte von 0,97 $g/cm^3$ und eine DSC-Schmelztemperatur von 128°C besaß.

Vergleichsbeispiel B

Beispiel 3 wurde mit dem Trägerkontakt gemäß Beispiel 1 aus DE 19 29 863 wiederholt, wobei die gleiche Menge Wasserstoff vorgelegt wurde. Der Katalysator wurde mit 3,4 mmol Ti/h vermischt mit 48 mmol/h $Al(C_2H_5)_3$ zudosiert. Ethylen, Wasserstoff und 1-Buten wurden wie in Beispiel 3 bis zum Enddruck von 9 bar zudosiert. Das entstehende Produkt war auf einer Drucknutsche nicht filtrierbar, da das übliche Filtertuch (lichte Maschenweite ca. 50 µm) rasch verstopfte. Eine Probe der Suspension wurde vollständig eingeengt und nach dem Trocknen im Vakuum eine Viskositätszahl von 64 $cm^3$/g bestimmt. Die aus der Ethylenaufnahme berechnete Katalysator-Ausbeute betrug ca. 0,5 kg/mmol Ti. Dieser Trägerkontakt war damit in diesem Bereich schlecht mit Wasserstoff regelbar und für die Suspensions-Polymerisation ungeeignet.

Tabelle 1

| Zusammenstellung der Versuche | | | | | | | |
|---|---|---|---|---|---|---|---|
| (KA: Katalysator-Aktivität; Smv: dynamische Viskosität der Schmelze; VZ: Viskositätszahl; SD: Schüttdichte; n.b.: Wert nicht bestimmt) | | | | | | | |
| Beispiel Nr. | KA (kg/mmolTi) | Dichte ($g/cm^3$) | Smv (140°C) (mPa s) | VZ ($cm^3$/g) | SD ($g/dm^3$) | $d_{50}$ (µm) | < 100 µm Gew% |
| 2 | 0,44 | n.b. | 220 | 17,2 | n.b. | n.b. | n.b. |
| 3 | 8,8 | 0,954 | 17200 | 48 | 270 | 276 | 3 |
| 4 | 7,6 | 0,953 | 26200 | 53 | 330 | 258 | 7 |

Tabelle 1 (fortgesetzt)

| Zusammenstellung der Versuche | | | | | | | |
|---|---|---|---|---|---|---|---|
| (KA: Katalysator-Aktivität; Smv: dynamische Viskosität der Schmelze; VZ: Viskositätszahl; SD: Schüttdichte; n.b.: Wert nicht bestimmt) | | | | | | | |
| 5 | 10,6 | 0,953 | 33600 | 57 | 330 | 270 | 6 |
| 6 | 15,6 | 0,953 | 80000 | 69 | 370 | 284 | 9 |
| 7 | 6,9 | 0,971 | 47400 | 61 | 375 | 211 | 13 |
| 8 | 7,6 | 0,970 | n.b. | 73 | 430 | 231 | 9 |
| 9 | 5,7 | 0,932 | 520 | 21 | n.b. | n.b. | n.b. |
| 10 | 3,6 | 0,970 | 110 | 14,5 | n.b. | n.b. | n.b. |

**Patentansprüche**

1. Verfahren zur Herstellung eines niedermolekularen Poly-1-olefins durch Homo- oder Copolymerisation eines 1-Olefins der Formel $R^4CH=CH2$, in der $R^4$ ein Wasserstoffatom oder einen Alkylrest mit 1 bis 10 Kohlenstoffatomen bedeutet, in Suspension, in Lösung oder in der Gasphase, bei einer Temperatur von 20 bis 200 °C und einem Druck von 0,5 bis 50 bar, in Gegenwart eines Katalysators, der sich zusammensetzt aus

   (a) dem Umsetzungsprodukt einer Magnesiumalkoholat-Dispersion, deren Telichengrösse 100 bis 3000 nm beträgt, wobei im ersten Schritt mit einer Verbindung eines Metalls aus der Gruppe Titan, Zirkon, Vanadium und Chrom und in einem zweiten Schritt mit einer aluminiumorganischen Verbindung reagiert wird (Komponente a)
   (b) und einer metallorganischen Verbindung eines Metalls der Gruppe I, II, oder III des Periodensystems (Komponente b),
   dadurch gekennzeichnet, dass man die Molmasse des Polymerisats durch Wasserstoff regelt, so daß niedermolekulare Poly-1-olefine mit einer Viskositätszahl kleiner 80 cm$^3$/g entstehen.

2. Verfahren gemäß Anspruch 1, dadurch gekennzeichnet, daß die Polymerisation in Lösung stattfindet.

3. Verfahren nach Anspruch 1 oder 2, dadurch gekennzeichnet, daß ein Magnesiumalkoholat der Formel $Mg(0R^1)(0R^2)$, in der $R^1$ und $R^2$ gleich oder verschieden sind und einen Alkylrest mit 1 bis 6 C-Atomen bedeuten, eingesetzt wird.

4. Verfahren nach Anspruch 1 oder 2, dadurch gekennzeichnet, daß das eingesetzte Magnesiumalkoholat $Mg(0C_2H_5)_2$, $Mg(0nC_3H_7)_2$ oder $Mg(0iC_3H_7)_2$ ist.

5. Verfahren gemäß Anspruch 1 oder 2, dadurch gekennzeichnet, daß zur Herstellung der Komponente a als aluminiumorganische Verbindung Ethylaluminium-sesquichlorid $(C_2H_5)_3Al_2Cl_3$ eingesetzt wird.

**Claims**

1. A process for producing a low molecular-weight poly-1-olefin by homo- or copolymerization of a 1-olefin having the formula $R^4CH=CH_2$, in which $R^4$ is a hydrogen atom or an alkyl radical having from 1 to 10 carbon atoms, in suspension, in solution or in the gas phase at a temperature of from 20 to 200°C and a pressure of from 0.5 to 50 bar in the presence of a catalyst which is composed of

   (a) the reaction product of a magensium alkoxide dispersion, the particle size of which is from 100 to 3000 nm, reaction being carried out in the first step with a compound of a metal selected from the group consisting of titanium, zirconium, vanadium and chromium and in a second step with an organoaluminum compound (component a)
   (b) and an organometallic compound of a metal of group I, II, or III of the Periodic Table (component b),
   which comprises controlling the molecular weight of the polymer by means of hydrogen so that low molecular-weight poly-1-olefins having a viscosity number of less than 80 cm$^3$/g are produced.

**2.** The process as claimed in claim 1, wherein the polymerization takes place in solution.

**3.** The process as claimed in claim 1 or 2, wherein a magnesium alkoxide of the formula $Mg(OR^1)(OR^2)$, in which $R^1$ and $R^2$ are identical or different and are an alkyl radical having from 1 to 6 carbon atoms, is used.

**4.** The process as claimed in claim 1 or 2, wherein the magnesium alkoxide used is $Mg(OC_2H_5)_2$, $Mg(OnC_3H_7)_2$ or $Mg(OiC_3H_7)_2$.

**5.** The process as claimed in claim 1 or 2, wherein the organoaluminum compound used for the preparation of component a is ethylaluminum sesquichloride $(C_2H_5)_3Al_2Cl_3$.

**Revendications**

**1.** Procédé de préparation d'une poly-1-oléfine de bas poids moléculaire par homo- ou copolymérisation d'une 1-oléfine de formule $R^4CH=CH_2$ dans laquelle $R^4$ représente un atome d'hydrogène ou un reste alkyle ayant 1 à 10 atomes de carbone, en suspension, en solution ou en phase gazeuse, à une température de 20 à 200°C et une pression de 0,5 à 50 bars, en présence d'un catalyseur, qui est constitué par

(a) le produit de réaction d'une dispersion d'alcoolate de magnésium, dont la taille de particules est de 10 à 3000 nm, en taisant réagir dans un premier stade sur un composé d'un métal du groupe du titane, du zirconium, du vanadium et du chrome et dans un second stade, sur un composé organoaluminié (constituant a)
(b) et un composé organométallique d'un métal des groupes I, II ou III de la Classification Périodique des Eléments (constituant b),
caractérisé en ce qu'on régule le poids moléculaire du polymère au moyen de l'hydrogène de façon telle qu'il se forme des poly-1-oléfines ayant un indice de viscosité inférieur à 80 cm$^3$/g.

**2.** Procédé selon la revendication 1, caractérisé en ce que la polymérisation est mise en oeuvre dans une solution.

**3.** Procédé selon la revendication 1 ou 2, caractérisé en ce qu'on utilise un alcoolate de magnésium de formule $Mg(OR^1)(OR^2)$, dans laquelle $R^1$ et $R^2$ sont identiques ou différents et représentent un reste alkyle ayant 1 à 6 atomes de carbone.

**4.** Procédé selon la revendication 1 ou 2, caractérisé en ce que l'alcoolate de magnésium utilisé répond aux formules $Mg(OC_2H_5)_2$, $Mg(OnC_3H_7)_2$ ou $Mg(OiC_3H_7)_2$.

**5.** Procédé selon la revendication 1 ou 2, caractérisé en ce qu'on utilise pour la préparation du constituant a, en tant que composé organoaluminié, un sesquichlorure d'éthylaluminium $(C_2H_5)_3Al_2Cl_3$.